# EUROPÄISCHE PATENTSCHRIFT

(11) **EP 4 092 351 B1**
(45) Veröffentlichungstag und Bekanntmachung des Hinweises auf die Patenterteilung: **12.03.2025**
(21) Anmeldenummer: 21174107.9
(22) Anmeldetag: 17.05.2021
(51) Int. Cl.: F24S 25/613, H02S 20/23

(54) **DACHHAKEN ZUR BEFESTIGUNG VON AUFLAGEELEMENTEN MIT EINER DACHKONSTRUKTION, SOWIE MONTAGEVERFAHREN**
ROOF HOOK FOR FIXING SUPPORT ELEMENTS TO A ROOF CONSTRUCTION AND METHOD OF ASSEMBLY
CROCHETS DE TOITURE DESTINÉ À LA FIXATION DES ÉLÉMENTS D'APPUI À UNE CONSTRUCTION DE TOIT, AINSI QUE PROCÉDÉ DE MONTAGE

(43) Veröffentlichungstag der Anmeldung: 23.11.2022
(73) Patentinhaber: AEROCOMPACT Group Holding AG, 1010 Wien (AT)
(72) Erfinder: GANAHL, Christian, 6822 Satteins (AT)
(74) Vertreter: Patent- und Rechtsanwälte Behrmann Wagner PartG mbB

(56) Entgegenhaltungen:
- EP-A1- 2 775 231
- DE-A1- 102005 059 487
- DE-A1- 102009 022 718
- US-A1- 2011 314 751

## Beschreibung

Die vorliegende Erfindung betrifft einen Dachhaken zur Befestigung von Auflageelementen, insbesondere Photovoltaik- und/oder Solarthermie-Paneele, mit oder an einer Dachkonstruktion nach dem Oberbegriff des Anspruchs 1, eine Dachunterkonstruktion mit wenigstens einem Dachhaken und ein Verfahren zur Montage des Dachhakens mit einer Dachunterkonstruktion.

Gattungsgemäße Dachhaken, insbesondere Schrägdachhaken, dienen als Montage- oder Verbindungselemente für Auflageelemente mit oder an einer Dachkonstruktion. Dabei sollen die Auflageelemente einerseits oberhalb einer Dacheindeckung angeordnet werden und andererseits soll die Last dieser Auflageelemente durch die darunterliegende Dachunterkonstruktion getragen werden. Bei solchen Auflageelementen handelt es sich bevorzugt um plattenförmige Photovoltaik- und/oder Solarthermie-Paneele, die vorzugsweise auf einer Montageschiene montierbar sind, die wiederum mittels der Dachhaken mit einer Dachunterkonstruktion verbunden ist. Bei den Dachkonstruktionen befindet sich regelmäßig ein hölzerner Dachstuhl als Dachunterkonstruktion und Dachpfannen oder Dachziegel als Dacheindeckung.

Für diesen Verwendungszweck weist der Dachhaken einen Bügelträger zum Umgreifen der Dacheindeckung und einen Grundträger zur Auflage auf der Dachunterkonstruktion auf. Für eine Feinjustage und Ausrichtung des Bügelträgers an der Dacheindeckung kann der Bügelträger lösbar und seitlich verstellbar, sowie höhenverstellbar mit dem Grundträger verbunden werden. Zur Montage des Dachhakens wird ein Teil der Dacheindeckung, insbesondere eine Dachpfanne oder ein Pfannenziegel, beispielsweise im Bereich eines Sparrens der Dachunterkonstruktion, entfernt. In bekannten Montageverfahren wird in einem ersten Schritt der Grundträger auf dem Sparren ausgerichtet und verschraubt. In einem zweiten Schritt wird der Bügelträger an der noch vorhandenen und/oder wieder zu ergänzenden oder zu verschließenden Dacheindeckung ausgerichtet und mit dem Grundträger verschraubt.

In diesen zwei Montageschritten werden üblicherweise unterschiedliche Schraubenarten verwendet. So wird der Grundträger je nach Dachunterkonstruktion mit Holzschrauben oder Betonschrauben befestigt. Der Bügelträger hingegen wird mit einer Metallschraube oder einer Schrauben-Mutter Verbindung mit dem Grundträger verbunden, wobei unterschiedliche Werkzeuge erforderlich sein können und ein Werkzeugwechsel durch gleichzeitiges Fixieren der Bügelträgerausrichtung die Montage kompliziert, ungenau und zeitintensiv gestalten lässt.

Die EP 2 474 796 B1 offenbart einen Dachhaken mit einem Fußteil oder einem Grundträger zur Verbindung mit einer Dachunterkonstruktion und einem Hakenteil oder Bügelträger für die Befestigung einer über einer Dacheindeckung befindlichen Tragkonstruktion oder einem Funktionselement, wobei der Grundträger einen zu einer Grundplatte senkrechten Winkelschenkel mit mehreren Aufnahmenuten entlang einer Höhenrichtung aufweist, in die der Bügelträger mit einem gabelförmigen Ende mit Federelementen zur Seiten- und Höhenverstellung formschlüssig einschiebbar ist. Dabei weist der Grundträger in dem Winkelschenkel eine Verbindungslängsnut auf, in die eine Mutter oder ein Nutstein eingesetzt wird, um den Bügelträger mit dem Grundträger mittels einer Schrauben-Nutsteinverbindung zu fixieren. In einem Montageschritt muss also zur Fixierung des Bügelträgers ein zusätzlicher Nutstein in die Verbindungslängsnut eingesetzt und eine Schraube senkrecht zu der Höhenrichtung eingeschraubt werden. Letztere kann beispielsweise mit einem Innensechskant ausgestaltet sein, während die Befestigung des Grundträgers über Schrauben mit Kreuzschlitz-Köpfen erfolgen kann.

Die EP 2 828 588 B1 offenbart ebenfalls einen Dachhaken mit einem Grundträger und einem ebenfalls höhenverstellbaren Bügelträger, wobei der Grundträger seitliche Aufnahmenuten mit einer zusätzlichen mittigen Abstützstrebe aufweist, in die der Bügelträger mit einem gabelförmigen Ende zur Seiten- und Höhenverstellung formschlüssig einschiebbar ist. Das gabelförmige Ende weist einen Verzweigungsabschnitt in zwei Federelemente mit einem Zwischensteg auf, wobei der Zwischensteg eine Gewindebohrung aufweist, in die eine Klemmschraube eingesetzt wird, um den Bügelträger gegen die Abstützstrebe zu verklemmen und mit dem Grundträger zu fixieren. In einem Montageschritt muss also zur Fixierung des Bügelträgers eine Klemmschraube durch eine Öffnung in dem Bügelträger geführt, insbesondere ausgerichtet, und anschließend in die darunterliegende Gewindebohrung des Zwischenstegs geschraubt werden.

Die EP 2 775 231 A1 offenbart einen Dachhaken, insbesondere einen Montagebügel, zur Befestigung von Photovoltaikmodulen auf einer Dachunterkonstruktion. Der Dachhaken weist in einem Verbindungsbereich einen Art Verstärkungsbügel auf, der Befestigungsöffnungen aufweist, die mit den Befestigungsöffnungen des Dachhakens überlappen. Der Verstärkungsbügel ist insbesondere dazu ausgebildet eine Elastizität in einem Haltebereich des Dachhaken einstellen zu können und weist Bohrlöcher zur Verschraubung auf.

Die US 2011/314751 A1 offenbart ebenfalls einen Dachhaken zur Befestigung von Photovoltaikanlagen, der einen Grundträger mit einer Befestigungsöffnung zur Montage auf einer Dachunterkonstruktion und einen Bügelträger zur Befestigung eines Auflageelements aufweist. Dabei ist der Bügelträger mit dem Grundträger außerhalb eines Verbindungsabschnitts zu der Dachunterkonstruktion verschraubt. Der Grundträger selbst wird separat zu dem Bügelträger durch die Befestigungsöffnung mit der Dachunterkonstruktion verschraubt.

Auch die DE 10 2009 022 718 A1 offenbart einen Dachhaken für Auflageelemente, insbesondere Solarmodule, der eine Grundplatte zur Auflage auf einer Dachunterkonstruktion und einen Bügelträger zum Umgreifen einer Dacheindeckung aufweist. In der Grundplatte sind Führungslaschen und ein aus der Grundplatte hervorragender Gewindebolzen vorgesehen, um den Bügelträger zu befestigen.

Die DE 10 2005 059 487 A1 offenbart einen Dachhaken für Auflageelemente, insbesondere Photovoltaikmodule, wobei eine Montageplatte vorgesehen ist, welche anstelle eine Dachziegels in den Dachziegelverbund eingesetzt wird. Der Dachhaken wird neben anderen Ausführungsformen zum Beispiel als Bügelhaken oder als Bügelträger ausgebildet, welcher durch ein oder mehrere Verbindungselemente, welche durch eine oder mehrere Durchführungsöffnungen geführt werden, an der Montageplatte aufgeschraubt ist.

Zur Verbindung des Bügelträgers mit dem Grundträger sind im Stand der Technik also zusätzliche Klemmverbindungen oder Schrauben-Nutsteinverbindungen erforderlich, die komplexe geometrische Anforderungen an den Dachhaken stellen und zusätzliche Montageschritte, sowie Verbindungsmittel und Montagewerkzeuge erfordern. Die Verbindung des Bügelträgers stellt also einen zusätzlichen Montageschritt zu der Verschraubung des Grundträgers mit der Dachunterkonstruktion dar, wobei die Verbindungsmittel sich von den üblichen Holz- oder Betonschrauben für den Grundträger unterscheiden. Insbesondere bei einer Montage auf einer Dachkonstruktion ist ein Anbringen von zusätzlichen und losen Verbindungsmitteln, sowie ein Werkzeugwechsel unerwünscht und zeitaufwändig, da die zusätzlichen Verbindungsmittel und Werkzeuge vor einem Herunterfallen gesichert werden müssen. Auch für die Sicherheit einer Montageperson, sollte die Montage möglichst einhändig und in kurzer Zeit ausführbar sein.

Der vorliegenden Erfindung liegt die Aufgabe zugrunde, einen Dachhaken vorzuschlagen, der bei Vermeidung der aus dem Stand der Technik bekannten Probleme die Montage eines bevorzugt höhenverstellbaren Dachhakens vereinfacht und beschleunigt, sowie deren Herstellung kostengünstiger gestaltet.

Des Weiteren besteht die Aufgabe darin eine Dachkonstruktion mit einem erfindungsgemäßen Dachhaken anzugeben.

Ferner besteht die Aufgabe darin ein Verfahren zur Montage des erfindungsgemäßen Dachhakens anzugeben.

Diese Aufgabe wird hinsichtlich des Dachhakens mit den Merkmalen des unabhängigen Anspruchs 1, hinsichtlich der Dachkonstruktion mit den Merkmalen des Anspruchs 13 und hinsichtlich des Montageverfahrens mit den Merkmalen des Anspruchs 14 gelöst.

Vorteilhafte Ausführungsformen sind Gegenstand der Unteransprüche.

Erfindungsgemäß wird ein Dachhaken zur Befestigung von Auflageelementen, insbesondere Photovoltaik- und/oder Solarthermie-Paneele, mit einer Dachunterkonstruktion beansprucht, wobei der Dachhaken einen Bügelträger zum Umgreifen einer Dacheindeckung und einen Grundträger zur Auflage auf der Dachunterkonstruktion umfasst, wobei der Grundträger bevorzugt mehrere Aufnahmenuten vertikal beabstandet zu einer Grundfläche entlang einer Höhenrichtung aufweist, in die der Bügelträger mit zumindest einem Verbindungsabschnitt entlang einer Längserstreckungsrichtung des Grundträgers formschlüssig einschiebbar ist. Dabei weist der Bügelträger in dem Verbindungsabschnitt zumindest eine erste Befestigungsöffnung und der Grundträger zumindest eine zweite Befestigungsöffnung auf, wobei im montierten Zustand sich wenigstens eine erste und eine zweite Befestigungsöffnung zumindest teilweise derart überlappen, dass Verbindungsmittel zu der Dachunterkonstruktion hindurchführbar sind.

Dabei hat die Erfindung erstaunlicherweise erkannt, dass durch die überlappende Ausbildung von wenigstens einem Befestigungsöffnungs-Paar in dem Bügelträger und dem Grundträger, der montierte Bügelträger gleichzeitig mit dem Grundträger ausgerichtet, sowie im selben Montageschritt und mit einem gemeinsamen Verbindungsmittel mit der Dachunterkonstruktion verbunden werden kann. Deshalb sind für die Fixierung des Bügelträgers auf dem Grundträger vorteilhafterweise keine zusätzlichen Verbindungsmittel oder ein Werkzeugwechsel notwendig. Eine Montageperson oder ein Benutzer auf der Dachkonstruktion kann also einhändig den Dachhaken zum Beispiel auf einem Dachsparren ausrichten und fixieren. Ein händisches Einführen von losen zusätzlichen Verbindungsmitteln, die insbesondere eine aufwändige und präzise Ausrichtung erfordern würden, ist vorteilhafterweise nicht notwendig. So kann also die Montage auf einer Dachkonstruktion wesentlich vereinfacht und dadurch auch die Arbeitssicherheit einer Montageperson verbessert werden.

Auch zur Herstellung des Dachhakens sind vorteilhafterweise keine Gewindebohrungen oder komplexe Nutvertiefungen notwendig, die zusätzliche dreidimensionale spanende und kostenintensive Bearbeitungsschritte erfordern würden.

Des Weiteren werden auch die mechanischen Anforderungen an den Grundträger reduziert, da ein Teil der Last auf den Bügelträger durch das Verbindungsmittel direkt auf die Dachunterkonstruktion übertragen wird. So werden die mechanischen Anforderungen einer Feder-Nut-Verbindung des Dachhakens reduziert oder der Dachhaken kann für höhere Lasten eingesetzt werden.

Vorzugsweise wird der Dachhaken jedoch in Ländern mit geringer zu erwartender Schneelast, insbesondere in tiefen Lagen oder in südlichem Klima, besonders in Italien oder Holland, eingesetzt und ist insbesondere für die Verwendung für eine Lattung einer Dachkonstruktion mit einer geringen Höhe geeignet.

Ganz besonders bevorzugt weist der Grundträger mehrere Aufnahmenuten vertikal beabstandet zu der Grundfläche und entlang der Höhenrichtung auf, um eine Höhenverstellung des Bügelträgers in Bezug zu dem Grundträger zu ermöglichen. Mit dieser Höhenverstellung kann der Bügelträger vorteilhafterweise an einer Dacheindeckung ausgerichtet werden, derart, dass die Abdichtung der Dacheindeckung weiter gewährleistet ist.

Alternativ zu den mehreren Aufnahmenuten kann auch eine Aufnahmenut, insbesondere ein Aufnahmenutenpaar, in dem Grundträger ausgebildet sein, um den Bügelträger in den Grundträger bevorzugt formschlüssig einschieben zu können. Dadurch kann eine seitliche Ausrichtung gewährleistet werden und der Grundträger in einer Höhenrichtung besonders platzsparend ausgebildet sein.

In einer besonders vorteilhaften Ausführungsform der Erfindung ist der Grundträger als ein U-förmiger Profilkörper mit einer Grundplatte und einem ersten und einem zweiten seitlichen Führungsschenkel ausgebildet, wobei die bevorzugt mehreren Aufnahmenuten jeweils in den zwei Führungsschenkeln entlang einer Längserstreckungsachse ausgebildet sind. Besonders da sich die ersten und zweiten Befestigungsöffnungen überlappen und vorzugsweise kein separater Bereich für die Befestigung des Bügelträgers notwendig ist, ist ein solcher Grundträger besonders platzsparend. Durch die kleinere Baugröße des Grundträgers ergeben sich Vorteile bei der Montage in einem kleinen Einbauraum zwischen der Dachunterkonstruktion und der darauf liegenden Dacheindeckung, sowie in der Verpackung des Grundträgers und ein geringerer Materialeinsatz in der Herstellung.

In einer weiteren besonders vorteilhaften Ausführungsform der Erfindung kann der Bügelträger in dem Verbindungsabschnitt einen Verzweigungsabschnitt in ein erstes Federelement und ein zweites Federelement aufweisen, die zum Eingriff in eine der bevorzugt mehreren Aufnahmenuten ausgebildet sind, wobei die zumindest eine erste Befestigungsöffnung zumindest in dem ersten Federelement ausgebildet ist, insbesondere eine dem Bügelabschnitt des Bügelträgers abgewandten ersten Federelement. Durch die Verzweigung in zwei Federelemente kann eine Feder-Nut-Verbindung zwischen dem Bügelträger und dem Grundträger ermöglicht werden. Die Federelemente sind zumindest in endseitigen Abschnitten entsprechend den Dimensionen der Aufnahmenuten ausgebildet, um im montierten Zustand formschlüssig in die Aufnahmenuten einzugreifen. Durch die Aufteilung in zwei Federelemente wird eine Kraftbeaufschlagung auf den Bügelträger aufgeteilt und vorteilhafterweise gleichmäßig auf den Grundträger übertragen. Durch die Ausbildung der ersten Befestigungsöffnung außerhalb des Bügelabschnitts, lassen sich Verbindungsmittel mit einem Montagewerkzeug, ohne räumliche Einschränkung durch den Bügelabschnitt, besonders einfach montieren. Bevorzugt sind die Aufnahmenuten als zumindest ein Aufnahmenutenpaar ausgebildet, die das erste und das zweite Federelement, also ein Federelementepaar, aufnehmen. Weiter bevorzugt sind für eine Höhenverstellung mehrere Aufnahmenuten als mehrere Aufnahmenutenpaare entlang der Höhenrichtung ausgebildet.

In einer alternativen Ausführungsform, kann der Verbindungsabschnitt auch nurmehr durch ein erstes Federelement ausgebildet sein, wobei der Grundträger zusätzlich einen vorzugsweise stufenförmigen Auflageabschnitt aufweist, auf dem der Bügelträger im montierten Zustand zusätzlich zumindest teilweise aufliegt. In dieser Ausführungsform wird ein Formschluss nurmehr durch eine Feder-Nut-Verbindung erreicht, wobei in Kombination mit einem seitlichen Anschlag des stufenförmigen Auflageabschnitts eine formschlüssige Verbindung und/oder mit den Verbindungsmitteln eine zusätzliche kraftschlüssige Verbindung mit dem Grundträger erreichbar ist. Mit anderen Worten kann durch die gemeinsamen Verbindungsmittel der Bügelträger gegen den Grundträger und gleichzeitig der Grundträger gegen die Dachunterkonstruktion gepresst werden und so beide Komponenten des Dachhakens fixiert werden. In dieser alternativen Ausführungsform kann/können vorzugsweise eine einzige Aufnahmenut oder mehrere Aufnahmenuten entlang der Höhenrichtung, vorzugsweise in einem Führungsschenkel, in dem Grundträger ausgebildet sein.

In einer bevorzugten Weiterbildung des Bügelträgers, ist ein Profil der zwei Federelemente im Verzweigungsabschnitt zur Spannungsoptimierung lambdaförmig und/oder mit einem bogenförmigen ersten Federelement ausgebildet, wobei das lambdaförmige Profil im Verzweigungsabschnitt bevorzugt einen Verzweigungsradius von wenigstens 2mm bis 5mm und/oder das bogenförmige erste Federelement bevorzugt einen Radius von wenigstens 40mm bis 50mm aufweist. Der Verzweigungsabschnitt weist im Gegensatz zu einem V-förmigen Profil geringere Kerbspannungen auf und Spannungsspitzen, insbesondere im Bereich der Außenseiten des ersten Federelements, können reduziert werden. Durch die Spannungsoptimierung können Belastungen auf den Bügelträger gleichmäßiger auf die Dachunterkonstruktion übertragen werden und insbesondere das erste Federelement kann mit einem geringeren Querschnitt oder einer geringeren Höhe ausgebildet sein.

In einer bevorzugten Ausführungsform bildet der Verbindungsabschnitt des Bügelträgers zumindest im Bereich der zumindest einen ersten Befestigungsöffnung eine ebene und im montierten Zustand zu der Grundfläche parallele Anschlagsoberfläche für das Verbindungsmittel aus. Dadurch können Verbindungsmittel, insbesondere eine Schraubverbindung mit Schraubenkopf und/oder Unterlegscheiben, auf der Anschlagsoberfläche vorzugsweise flächig aufliegen und so eine Krafteinleitung zwischen den Verbindungsmitteln und dem Bügelträger gleichmäßiger gestaltet werden.

Vorzugsweise ist dabei die Anschlagsoberfläche in einer Oberseite des ersten Federelements ausgebildet, wobei das erste Federelement bevorzugt zusätzlich eine der Anschlagsoberfläche gegenüberliegende ebene erste Auflagefläche aufweist, die im montierten Zustand in einer unteren ersten Aufnahmenut auf der Innenseite der Grundplatte des Grundträgers aufliegt. Im montierten Zustand des Bügelträgers in dieser unteren Stellung liegt der Bügelträger im Bereich der zumindest einen ersten Befestigungsöffnung direkt auf dem Grundträger auf. Dadurch kann eine Krafteinleitung der Verbindungsmittel durch die angrenzenden Materialien übertragen werden, ohne dabei die Feder-Nut-Verbindung zu beanspruchen. So können besonders in dieser unteren Stellung besonders hohe Beanspruchungen auf die Dachunterkonstruktion übertragen werden.

Besonders bevorzugt weist der Bügelträger vor dem Verzweigungsabschnitt der zwei Federelemente eine ebene zweite Auflagefläche auf, die im montierten Zustand in einer unteren ersten Aufnahmenut auf einer Innenseite des Grundträgers aufliegt. Dadurch kann die Lasteinleitung von dem Bügelträger in den Grundträger zusätzlich zu einer Feder-Nut-Verbindung weiter unterstützt werden und so höhere Beanspruchungen übertragen werden.

In einer weiteren bevorzugten Ausführungsform, weist der erste Führungsschenkel des Grundträgers, der im montierten Zustand einem Bügelabschnitt abgewandt ist, eine kleinere Höhe auf als der zweite Führungsschenkel, um besonders platzsparend in einem schrägen Einbauraum zwischen der Dacheindeckung und der Dachunterkonstruktion montierbar zu sein. Mit anderen Worten ist das Profil des Grundträgers so einer reduzierenden Einbauhöhe zwischen insbesondere zwei überlappenden Dachpfannen hin zu einem Aufliegebereich auf der Dachunterkonstruktion angepasst.

In diesem Zusammenhang ist bevorzugt vorgesehen, dass auch eine Höhe des ersten Federelements des Bügelträgers reduziert ist und/oder die Aufnahmenuten in dem ersten Führungsschenkel mit einer geringeren Höhe oberhalb der Grundfläche angeordnet sind. Für diesen Versatz der Aufnahmenuten weist das erste Federelement in einem Endabschnitt ebenfalls eine Abstufung auf. Dadurch kann vorteilhafterweise die Höhe des ersten Führungsschenkels reduziert werden, ohne dabei die mechanischen Eigenschaften der Feder-Nut-Verbindung negativ zu beeinflussen.

Weiter ist in diesem Zusammenhang insbesondere der oben bereits genannte Bügelträger mit einem lambdaförmigen Profil des Verzweigungsabschnitts von Vorteil, da durch einen so optimierten Spannungsverlauf die Höhe des ersten Federelements in vorteilhafterweise reduziert werden kann.

In einer weiteren bevorzugten Ausführungsform des Grundträgers sind mehrere zweite Befestigungsöffnungen in dem Grundträger in einer ersten Reihenanordnung und/oder einer zweiten Reihenanordnung entlang der Längserstreckungsachse und versetzt zu einer Mittelebene zwischen den Aufnahmenuten angeordnet. Durch die mehreren, bevorzugt parallel zueinander verlaufenden zweiten Befestigungsöffnungen kann im montierten Zustand der Bügelträger in verschiedenen seitlich verstellten Anordnungen entlang der Längserstreckungsachse mit der Dachunterkonstruktion befestigt werden. Die weitere Reihenanordnung kann dann zur zusätzlichen Befestigung des Grundträgers mit der Dachunterkonstruktion verwendet werden.

Bevorzugt weist die erste und/oder die zweite Reihenanordnung entlang der Längserstreckungsachse ein Langloch und zwei seitliche Durchgangsbohrungen auf. Insbesondere durch das Langloch kann eine seitliche Ausrichtung des Bügelträgers erleichtert werden, da die Verbindungsmittel, die durch den Bügelträger und das Langloch in dem Grundträger geführt sind, beliebig seitlich und entlang der Längserstreckungsrichtung ausgerichtet werden können.

Vorzugsweise weist eine erste Reihenanordnung angrenzend an den ersten Führungsschenkel das Langloch und die zwei seitlichen Durchgangsbohrungen auf. Die zweite Reihenanordnung weist bevorzugt mehrere Durchgangsbohrungen auf, um den Grundträger zusätzlich mit der Dachunterkonstruktion zu befestigen.

Für einen Grundträger mit bevorzugt symmetrisch ausgebildeter Führungsschenkel sind die zweiten Befestigungsöffnungen in der ersten Reihenanordnung und in der zweiten Reihenanordnung vorzugsweise jeweils als ein Langloch mit zwei seitlichen Durchgangsbohrungen ausgebildet. Dabei können diese bevorzugt jeweils mit unterschiedlichen Längen und/oder Breiten, insbesondere von Langlöchern, oder unterschiedlichen Durchmessern von Durchgangsbohrungen, ausgebildet sein, um je nach Ausrichtung des Bügelträgers unterschiedliche Verbindungsmittel hindurchführen zu können.

Vorzugsweise entspricht eine Länge des Grundträgers zumindest dem zweifachen, besonders bevorzugt dem dreifachen, einer Breite des Bügelträgers. Durch die größere Dimension des Grundträgers entlang der Längserstreckungsrichtung, kann der Bügelträger eine Feder-Nut-Verbindung mit dem Grundträger eingehen, die gleichzeitlich seitlich ausgerichtet werden kann.

Besonders bevorzugt ist der Bügelträger und/oder der Grundträger aus Metall, insbesondere Aluminium, und in einem Strangpressverfahren herstellbar. Dadurch kann insbesondere eine komplexe Geometrie des Bügelträgers in großer Stückzahl hergestellt werden. Bevorzugt umfasst ein Herstellungsverfahren zusätzlich zu dem Strangpressverfahren eine eindimensionale spanende Bearbeitung, insbesondere ein Bohrverfahren, der ersten und zweiten Befestigungsöffnungen. Vorteilhafterweise sind also keine komplexeren zwei- oder dreidimensionale Fräsverfahren notwendig.

Vorzugsweise weist die erste und/oder die zweite Befestigungsöffnung zusätzlich ein Gewinde auf, um den Bügelträger im montierten Zustand mit dem Grundträger für einen Transport vor dem Montageeinsatz temporär, insbesondere mit einer Madenschraube, zu befestigen.

Die Erfindung betrifft auch eine Dachkonstruktion mit wenigstens einem zuvor beschriebenen Dachhaken und mit Verbindungsmitteln, wobei die Verbindungsmittel als wenigstens eine Schraube, insbesondere eine selbstbohrende Holzschraube und/oder eine Betonschraube, ausgebildet sind, die im montierten Zustand zumindest durch die erste und die zweite Befestigungsöffnung geführt sind und den Bügelträger zusammen mit dem Grundträger an der Dachunterkonstruktion kraftschlüssig befestigen. Je nach Material der Dachunterkonstruktion können also unterschiedliche Verbindungsmittel eingesetzt werden, wobei die Materialien üblicherweise aus Holz oder Beton bestehen.

Mit anderen Worten sind zur Befestigung des Dachhaken vorzugsweise mehrere identische Verbindungsmittel, besonders bevorzugt zumindest zwei Schrauben, einsetzbar. Ein Werkzeugwechsel kann deshalb umgangen werden, da vorzugsweise keine unterschiedlichen Schraubenarten, zum Beispiel zusätzliche Zylinderschrauben für Metallgewinde, erforderlich sind.

Weiterhin betrifft die Erfindung ein Verfahren zur Montage des zuvor beschriebenen Dachhakens auf einer Dachunterkonstruktion mit den folgenden Schritten, wobei der Dachhaken einen Bügelträger zum Umgreifen einer Dacheindeckung und einen Grundträger zur Auflage auf der Dachunterkonstruktion umfasst, wobei der Grundträger bevorzugt mehrere Aufnahmenuten entlang einer Höhenrichtung oberhalb einer Grundfläche aufweist. In einem ersten Schritt wird der Grundträger auf einer freigelegten Dachunterkonstruktion ausgerichtet. Vorhergehend oder während dem ersten Schritt wird der Verbindungsabschnitt des Bügelträgers formschlüssig in eine der bevorzugt mehreren Aufnahmenuten des Grundträgers eingeschoben und entlang der Längserstreckungsrichtung seitlich derart ausgerichtet, dass eine erste Befestigungsöffnung in dem Bügelträger mit einer zweiten Befestigungsöffnung in dem Grundträger zumindest teilweise überlappen. In einem bevorzugt anschließenden zweiten Schritt werden Verbindungsmittel wenigstens durch eine erste und eine zumindest teilweise überlappende zweite Befestigungsöffnung eingebracht. Alternativ oder zusätzlich kann der Bügelträger und der Grundträger auch bereits mit Verbindungsmitteln vormontiert sein. In einem bevorzugten dritten Schritt wird der Dachhaken, insbesondere durch ein Einschrauben der Verbindungsmittel, in einem ausgerichteten Zustand mit der Dachunterkonstruktion befestigt.

Weiter bevorzugt wird in dem Montageverfahren des zuvor beschriebenen Dachhakens der Bügelträger an einer Dacheindeckung, insbesondere einer Dachpfanne, ausgerichtet, wobei der Bügelträger derart seitlich entlang der Längserstreckungsrichtung verstellt wird und bevorzugt eine passende Aufnahmenut entlang der Höhenrichtung derart ausgewählt wird, dass der Bügelträger an einer Unterseite einer Dacheindeckung zumindest abschnittsweise flächig anliegt, um die Dichtheit der Dacheindeckung weiter zu gewährleisten. Vorzugsweise wird der Dachhaken dabei derart ausgerichtet, dass eine Bearbeitung der Dacheindeckung verhindert werden kann.

Weitere Vorteile und Einzelheiten der Erfindung ergeben sich aus der nachfolgenden Beschreibung bevorzugter Ausführungsformen der Erfindung sowie anhand der lediglich schematischen Zeichnungen.

Es zeigen:
- Fig. 1:: eine Seitenansicht des Dachhakens im montierten Zustand mit einer Dachkonstruktion,
- Fig. 2a bis Fig. 2e:: Ansichten auf den Dachaken mit Bügelträger und Grundträger im montierten Zustand,
- Fig. 3a bis Fig. 3e:: Detailansichten des Bügelträgers gemäß der Fig. 2a,
- Fig. 4a, 4b:: Seitenansicht und Draufsicht des Grundträgers gemäß der Fig. 2a.

Gleiche Elemente beziehungsweise Elemente mit gleicher Funktion sind in den Figuren mit den gleichen Bezugsziffern versehen.

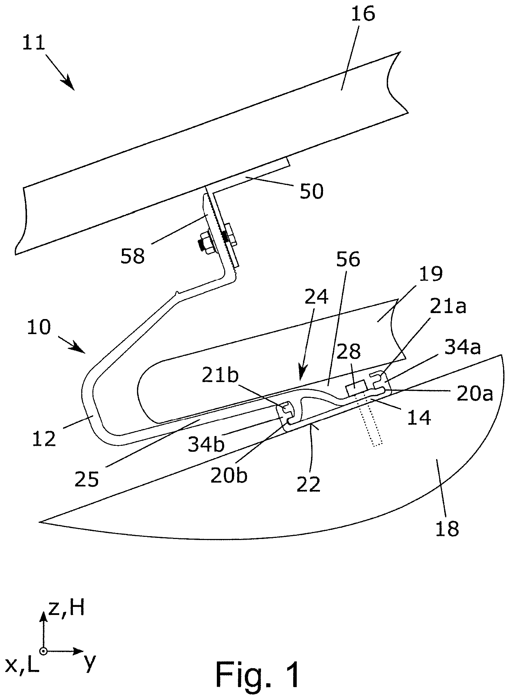

In der Fig. 1 ist ein Ausschnitt einer Dachkonstruktion 11 dargestellt, wobei ein bügelförmiger Dachhaken 10 eine Dacheindeckung 19 umgreift, um ein Auflageelement 16, insbesondere ein Photovoltaik- und/oder ein Solarthermie-Paneel, oberhalb der Dacheindeckung 19 aufzunehmen und unterhalb dieser mit einer Dachunterkonstruktion 18 zu befestigen. Der Dachhaken 10 ist zur Ausrichtung an der Dacheindeckung 19 zweiteilig mit einem Bügelträger 12 und einem Grundträger 14 ausgebildet, wobei vorzugsweise im montierten und ausgerichteten Zustand eine Dachpfanne der Dacheindeckung 19 möglichst flächig auf einem Bügelabschnitt 25 des Bügelträgers 12 anliegt und so die Dacheindeckung 19 weiterhin abgedichtet ist. Bevorzugt ist deshalb das Profil des Bügelträgers 12, insbesondere im Bereich des Bügelabschnitts 25, entsprechend einem Schrägdach winklig ausgebildet. Für eine seitliche Ausrichtung entlang einer Längserstreckungsrichtung L und eine Ausrichtung entlang einer Höhenrichtung H weist der Grundträger 14 mehrere Aufnahmenuten 20, 21 auf, in die der Bügelträger 12 mit einem Verbindungsabschnitt 24 in Form einer Feder-Nut-Verbindung formschlüssig eingreift. Zur Fixierung des Dachhakens 10 ist als bevorzugtes Verbindungsmittel 28 eine Schraube dargestellt, die durch den Bügelträger 12 und gleichzeitig den Grundträger 14 geführt ist und in die Dachunterkonstruktion 18 geschraubt ist.

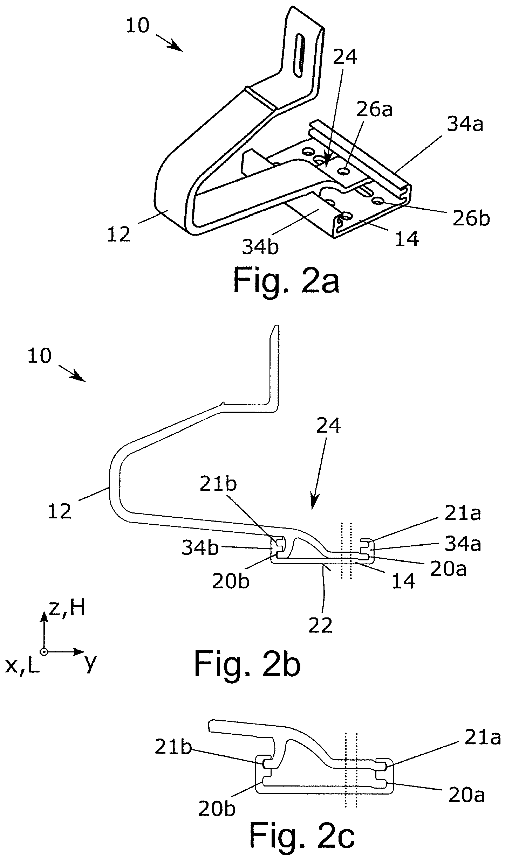

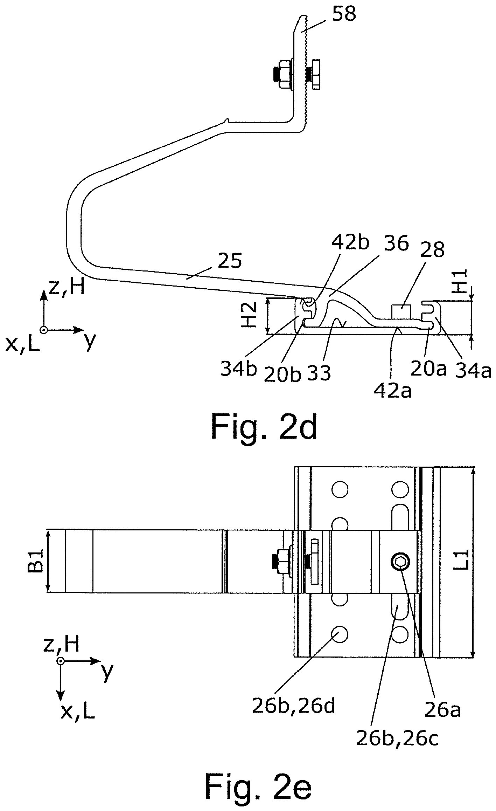

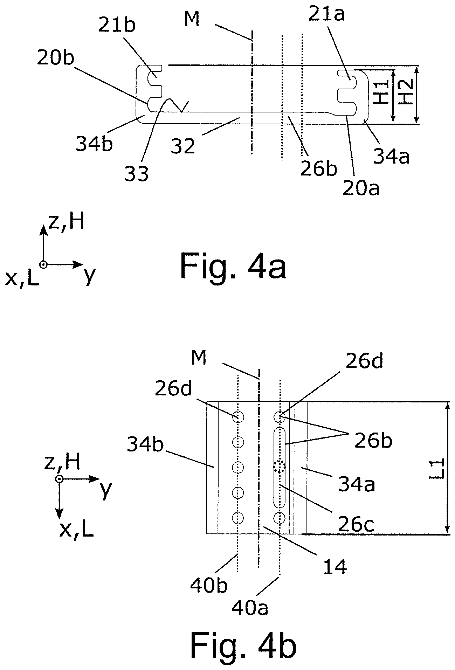

In der Fig. 2a, Fig. 2e oder Fig. 4b sind eine erste Befestigungsöffnung 26a in dem Verbindungsabschnitt 24 des Bügelträgers 12 und mehrere zweite Befestigungsöffnungen 26b in dem Grundträger 14 dargestellt, die im montierten Zustand durch seitliches Ausrichten entlang der Längserstreckungsrichtung L des Grundträgers 14 zumindest teilweise entlang der Höhenrichtung H in eine Überlappung gebracht werden können, um die gemeinsamen Verbindungsmittel 28 zu der Dachunterkonstruktion 18 hindurchzuführen.

Der Grundträger 14 ist, wie in der Fig. 4a und der Fig. 4b dargestellt, vorzugsweise als ein U-förmiger Profilkörper mit einer Grundplatte 32 zur Auflage auf der Dachunterkonstruktion 18 und zwei seitlichen Führungsschenkeln 34a, 34b ausgebildet, in die die mehreren Aufnahmenuten 20, 21 entlang der Längserstreckungsrichtung L eingebracht sind, wobei jeweils sich gegenüberliegende Aufnahmenuten 20, 21, insbesondere sich gegenüberliegende Aufnahmenutenpaare, eine gemeinsame Feder-Nut-Verbindung mit dem Bügelträger 12 ausbilden. Die zweiten Befestigungsöffnungen 26a sind vorzugsweise entlang der Höhenrichtung H in der Grundplatte 32 des Grundträgers 14 eingebracht. Erste Aufnahmenuten 20a, 20b sind angrenzend an die Grundplatte 32 ausgebildet und zweite Aufnahmenuten 21a, 21b zur Höhenverstellung entlang der Höhenrichtung H beabstandet zu der Grundplatte 32 angeordnet.

In der Fig. 2b und der Fig. 2c ist der Bügelträger 12 im montierten Zustand mit dem Grundträger 14 jeweils in zwei Montagezuständen in den ersten Aufnahmenuten 20a, 20b und den höher gelegenen zweiten Aufnahmenuten 21a, 21b dargestellt, wobei der Bügelträger 12 mit zwei Federelementen 38a, 38b in die jeweiligen Aufnahmenuten 20, 21 in den Führungsschenkeln 34a, 34b eingreift.

Alternativ wäre es auch denkbar, dass der Bügelträger 12 mit einem Federelement 38a in Aufnahmenuten 20a, 21a in dem ersten Führungsschenkel 34a einseitig eingreift und der zweite Führungsschenkel 34b stufenartige Aufliegeflächen oder Abstützflächen für den Bügelträger 12 ausbildet und die Verbindungsmittel 28 den Bügelträger 12 gegen die Aufliegefläche drücken und den Dachhaken 10 so kraftschlüssig fixieren.

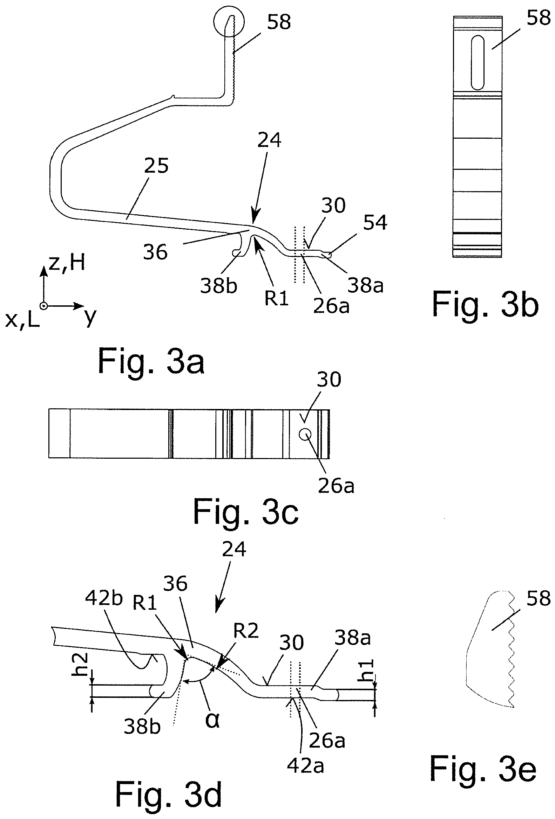

In der Fig. 2d, Fig. 3a und Fig. 3d ist der Verbindungsabschnitt 24 des Bügelträgers 12 mit den Federelementen 38a, 38b gezeigt, wobei der Verbindungsabschnitt 24 vorzugsweise einen Verzweigungsabschnitt 36 in ein erstes Federelement 38a aufweist, das dem Bügelabschnitt 25 des Bügelträgers 12 abgewandt ist oder in dessen Verlängerung angeordnet ist, und ein zweites Federelement 38b, das entlang der Höhenrichtung H etwa unterhalb des Verzweigungsabschnitts 36 und/oder des Bügelabschnitts 25 angeordnet ist. Dadurch, dass das erste Federelement 38a entlang der Höhenrichtung H nicht von dem Bügelabschnitt 25 abgedeckt ist, ist in diesem ersten Federelement 38a bevorzugt die erste Befestigungsöffnung 26a angeordnet. Insbesondere kann so ein Verbindungsmittel 28 einfach montiert und mit einem Montagewerkzeug vorzugsweise leicht zugänglich verschraubt werden.

Im Bereich der ersten Befestigungsöffnung 26a weist das erste Federelement 38a vorzugsweise eine ebene Anschlagsoberfläche 30 und bevorzugt auch eine ebene erste Auflagefläche 42a auf. Im montierten Zustand, siehe zum Beispiel die Fig. 2d, können Verbindungsmittel 28, insbesondere mit einem Schraubenkopf, flächig auf der Anschlagsoberfläche 30 aufliegen, wobei ein in den unteren ersten Aufnahmenuten 20 montiertes erstes Federelement 38a zusätzlich mit der Auflagefläche 42a auf der Innenseite 33 des Grundträgers 14 oder der Grundplatte 32 flächig aufliegt. Dadurch erfolgt eine Kraftübertragung von den Verbindungsmitteln 28, insbesondere eine Schraube, direkt auf die Dachunterkonstruktion 18, ohne dabei die Feder-Nut-Verbindung zu belasten.

Zusätzlich zeigt die Fig. 2d, dass der Bügelträger 12 im montierten Zustand in den unteren ersten Aufnahmenuten 20 eine ebene zweite Auflagefläche 42b mit dem Grundträger 14 ausbildet und so die mechanische Kraftübertragung von dem Bügelträger 12 in den Grundträger 14 weiter verbessert. Die zweite Auflagefläche 42b ist vorzugsweise vor dem Verzweigungsabschnitt 36 in einer Unterseite des Bügelabschnitts 25 ausgebildet, um im montierten Zustand auf einer Oberkante des Grundträgers 14, insbesondere einer Oberkante des zweiten Führungsschenkels 34b, aufliegen zu können.

Der in der Fig. 3d dargestellte Verzweigungsabschnitt 36 in die zwei Federelemente 38a, 38b ist vorzugsweise zur Optimierung der Kraftübertragung und eines mechanischen Spannungsverlaufs lambdaförmig und/oder vorzugsweise mit einem bogenförmigen ersten Federelement 38a ausgebildet. Ein Verzweigungsradius R1 zwischen den zwei Federelementen 38a, 38b beträgt vorzugsweise wenigstens 2mm bis 5mm und/oder das bogenförmige erste Federelement 38a weist bevorzugt einen Radius R2 von wenigstens 40mm bis 50mm auf. Ein Verzweigungswinkel α zwischen Tangenten an den Außenkanten der zwei Federelemente 38a, 38b im Verzweigungsabschnitt 36 beträgt vorzugsweise wenigstens 70°, besonders bevorzugt wenigstens 90°. Im Gegensatz zu einem denkbaren V-förmigen Verzweigungsabschnitt, zum Beispiel mit einem charakteristischen kleineren Verzweigungsradius R1 und ohne bogenförmige erste Federelemente 38a, kann mit dem dargestellten lambdaförmigen Profil eine Kerbspannung im Verzweigungsabschnitt 36, sowie Spannungsspitzen, insbesondere in den Außenseiten des ersten Federelements 38a, für übliche Traglastbeanspruchungen des Bügelträgers 12 reduziert werden. Insbesondere auf Grund dieser Spannungsoptimierung kann das erste Federelement 38a auch mit einem kleineren Querschnitt oder einer kleineren Höhe h1 im Vergleich zu der Höhe h2 des zweiten Federelements 38b ausgebildet sein.

Wie aus der Fig. 1 ersichtlich wird, ist der Dachhaken 10 vorzugsweise für Schrägdächer einsetzbar, wobei eine Dacheindeckung 19 bevorzugt schräg oder winklig überlappende Dachpfannen aufweist, in die der Dachhaken 10 montierbar ist. Ein Einbauraum 56 zwischen den Dachpfannen ist begrenzt oder eine Einbauhöhe nimmt von einem Überlappungsbereich hin zu einem Auflagebereich der Dachpfannen auf der Dachunterkonstruktion 18 ab. Deshalb sollte auch der Dachhaken 10 der Anordnung der Dacheindeckung 19 möglichst dem Einbauraum 56 angepasst sein, um eine Bearbeitung oder Erweiterung der Einbauhöhe und einen zusätzlichen Montagearbeitsschritt zu vermeiden.

Wie besonders in der Fig. 2d, Fig. 3a und der Fig. 4a dargestellt ist, ist deshalb vorzugsweise der in den Einbauraum 56 hineinragende erste Führungsschenkel 34a des Grundträgers 14 mit einer kleineren Höhe H1 als der zweite Führungsschenkel 34b mit einer Höhe H2 ausgebildet. Dies kann besonders auch dadurch erreicht werden, da das erste Federelement 38b, wie oben beschrieben, mit einer kleineren Höhe h1 ausgebildet sein kann und deshalb auch die Aufnahmenuten 20a, 21a in dem ersten Führungsschenkel 34a bevorzugt eine kleinere Höhe aufweisen. Zusätzlich sind diese Aufnahmenuten 20a, 21a bevorzugt entlang der Höhenrichtung H nach unten versetzt angeordnet und die erste Aufnahmenut 20a bildet bevorzugt teilweise eine Aussparung in der Grundplatte 32 des Grundträgers 14 aus. Das erste Federelement 38a weist entsprechend dieser Aussparung vorzugsweise eine endseitige Abstufung 54 auf.

In der Fig. 2a, Fig. 2e und der Fig. 4b sind mehrere zweite Befestigungsöffnungen 26b in dem Grundträger 14 dargestellt, die vorzugsweise in zwei Reihenanordnungen 40a, 40b entlang der Längserstreckungsachse L und mit einem Versatz zu einer Mittelebene M zwischen den Aufnahmenuten 20, 21 oder den Führungsschenkeln 34a, 34b des Grundträgers 14 angeordnet sind. Vorzugsweise weist die erste Reihenanordnung 40a zur Aufnahme der gemeinsamen Verbindungsmittel 28 des Bügelträgers 12 und des Grundträgers 14 ein Langloch 26c und zwei seitliche Durchgangsbohrungen 26d auf. Im montierten Zustand überlappt die erste Befestigungsöffnung 26a in dem Bügelträger 12, insbesondere eine Durchgangsbohrung, mit dem Langloch 26c, weshalb hier eine bevorzugt stufenfreie Ausrichtung des Bügelträgers 12 entlang der Längserstreckungsrichtung L ermöglicht wird. Die seitlichen Durchgangsbohrungen 26d in der ersten Reihenanordnung 40a und vorzugsweise auch die Durchgangsbohrungen 26d in der zweiten Reihenanordnung 40b sind bevorzugt als zusätzliche Fixierung des Grundträgers 14 mit der Dachunterkonstruktion 18 vorgesehen.

In einer alternativen Ausführungsform eines symmetrischen Grundträgers 14, wäre die Ausbildung eines zusätzlichen Langlochs 26c in der zweiten Reihenanordnung 40b von Vorteil, da dann der Bügelträger 12 unabhängig von dessen Ausrichtung in den Grundträger 14 eingeschoben werden könnte.

Besonders bevorzugt weist der Grundträger 14, wie in der Fig. 2e dargestellt, eine Länge L1 auf, die zumindest dem zweifachen, bevorzugt dem dreifachen, einer Breite B1 des Bügelträger 12 entspricht. Dadurch kann eine seitliche Ausrichtung bei gleichzeitiger vollständiger Ausbildung der Feder-Nut-Verbindung gewährleistet werden.

Zur Befestigung von Auflageelementen 16 und eines den Auflageelementen 16 zugeordneten Montageträgers 50, weist der Bügelträger 12 einen in der Fig. 1, Fig. 2d, Fig. 3a, Fig. 3b und Fig. 3e dargestellten endseitigen Aufnahmeabschnitt 58 mit vorzugsweise einer weiteren Befestigungsöffnung auf, insbesondere einem Langloch, um ein Verbindungsmittel aufzunehmen. Insbesondere das Langloch ermöglicht eine zusätzliche Höhenverstellung des Auflageelements 16 entlang der Höhenrichtung H. Der Aufnahmeabschnitt 58 weist vorzugsweise eine geriffelte Oberfläche mit feinen zahnförmigen Vorsprüngen auf, die im montierten Zustand mit dem Montageträger 50 zusammenwirken und diesen ausrichten, sowie eine teilweise formschlüssige Verbindung ermöglichen.

Für den Transport und die Verpackung des Dachhakens 10 ist der Bügelträger 12 vorzugsweise in den unteren Aufnahmenuten 20a, 20b des Grundträgers 14 vormontiert und bevorzugt mit einer Madenschraube fixiert.

Zur Montage des in der Fig. 1 dargestellten Dachhakens 10 wird vorzugsweise die Dacheindeckung 19 in dem Bereich eines Dachsparrens der Dachunterkonstruktion 18 entfernt. Der Grundträger 14 und/oder der Dachhaken 10 mit vormontiertem Bügelträger 12 wird dann auf der Dachunterkonstruktion 18 mit der Grundfläche 22 aufgelegt. Durch Wahl der entsprechenden Aufnahmenuten 20, 21 kann die Höhe des Bügelträgers 12 oberhalb der Grundfläche 22 ausgerichtet werden. Eine seitliche Ausrichtung erfolgt durch Verschieben des Bügelträgers 12 in der jeweiligen Aufnahmenut 20, 21 entlang der Längserstreckungsrichtung L, wobei die erste Befestigungsöffnung 26a in dem Bügelträger 12 sich mit einer darunterliegenden zweiten Befestigungsöffnung 26b in dem Grundträger 14 überlappt, um Verbindungsmittel 28 hindurchzuführen. Als Verbindungsmittel 28 kommen je nach Material der Dachunterkonstruktion 18 geeignete Schrauben, insbesondere Holz- und/oder Betonschrauben, zum Einsatz. Nach abgeschlossener Ausrichtung wird der Bügelträger 12 zusammen mit dem Grundträger 14 mit der Dachunterkonstruktion 18 verschraubt und fixiert. Weitere Verbindungsmittel 28 können dann in die zusätzlichen Durchgangsbohrungen 26d in der Grundplatte 32 zur weiteren Fixierung eingebracht werden.

Die Ausrichtung des Dachhakens 10 erfolgt vorzugsweise derart, dass die Dichtheit der Dacheindeckung 19 nicht beeinflusst ist und der Bügelabschnitt 25 bevorzugt zwischen den Dachpfannen einer Dacheindeckung 19 zumindest abschnittsweise flächig anliegt.

### Bezugszeichenliste

- 10: Dachhaken
- 11: Dachkonstruktion
- 12: Bügelträger
- 14: Grundträger
- 16: Auflageelemente
- 18: Dachunterkonstruktion
- 19: Dacheindeckung
- 20: erste Aufnahmenut
- 21: zweite Aufnahmenut
- 22: Grundfläche
- 24: Verbindungsabschnitt
- 25: Bügelabschnitt
- 26a, 26b: erste und zweite Befestigungsöffnung
- 26c: Langloch
- 26d: Durchgangsbohrung
- 28: Verbindungsmittel
- 30: Anschlagsoberfläche
- 32: Grundplatte
- 33: Innenseite der Grundplatte
- 34a, 34b: erster und zweiter Führungsschenkel
- 36: Verzweigungsabschnitt
- 38a, 38b: erstes und zweites Federelement
- 40a, 40b: erste und zweite Reihenanordnung
- 42a, 42b: erste und zweite Auflagefläche
- 50: Montageträger
- 54: Abstufung des ersten Federelements
- 56: Einbauraum
- 58: Aufnahmeabschnitt des Bügelträgers
- L: Längserstreckungsrichtung
- M: Mittelebene
- H: Höhenrichtung
- B1: Breite des Bügelträgers
- L1: Länge des Grundträgers
- H1, H2: Höhe des ersten und zweiten Führungsschenkels
- h1, h2: Höhe des ersten und zweiten Federelements
- R1: Verzweigungsradius
- R2: Radius des bogenförmigen ersten Federelements
- α: Verzweigungswinkel
- x, y, z: kartesisches Koordinatensystem

## Patentansprüche

1. Dachhaken (10) zur Befestigung von Auflageelementen (16), insbesondere Photovoltaik- und/oder Solarthermie-Paneele, mit einer Dachunterkonstruktion (18), wobei der Dachhaken (10) einen Bügelträger (12) zum Umgreifen einer Dacheindeckung (19) und einen Grundträger (14) zur Auflage auf der Dachunterkonstruktion (18) umfasst, wobei der Grundträger (14) eine Aufnahmenut (20), bevorzugt mehrere Aufnahmenuten (20, 21) vertikal beabstandet zu einer Grundfläche (22) entlang einer Höhenrichtung (H) aufweist, in die der Bügelträger (12) mit zumindest einem Verbindungsabschnitt (24) entlang einer Längserstreckungsrichtung (L) des Grundträgers (14) formschlüssig einschiebbar ist,
**dadurch gekennzeichnet,**
**dass** der Bügelträger (12) in dem Verbindungsabschnitt (24) zumindest eine erste Befestigungsöffnung (26a) und der Grundträger (14) zumindest eine zweite Befestigungsöffnung (26b) aufweist, wobei im montierten Zustand sich wenigstens eine erste und eine zweite Befestigungsöffnung (26a, 26b) zumindest teilweise derart überlappen, dass Verbindungsmittel (28) zu der Dachunterkonstruktion (18) hindurchführbar sind.

2. Dachhaken nach Anspruch 1,
**dadurch gekennzeichnet,**
**dass** der Grundträger (14) als ein U-förmiger Profilkörper mit einer Grundplatte (32) und einem ersten und einem zweiten seitlichen Führungsschenkel (34a, 34b) ausgebildet ist, wobei die bevorzugt mehreren Aufnahmenuten (20, 21) jeweils in den zwei Führungsschenkeln (34a, 34b) entlang der Längserstreckungsachse (L) ausgebildet sind.

3. Dachhaken nach einem der Ansprüche 1 oder 2,
**dadurch gekennzeichnet,**
**dass** der Bügelträger (12) in einem Verbindungsabschnitt (24) einen Verzweigungsabschnitt (36) in ein erstes Federelement (38a) und ein zweites Federelement (38b) aufweist, die zum Eingriff in eine der bevorzugt mehreren Aufnahmenuten (20, 21) ausgebildet sind, wobei die zumindest eine erste Befestigungsöffnung (26a) zumindest in dem ersten Federelement (38a) ausgebildet ist, insbesondere in einem dem Bügelabschnitt (25) des Bügelträgers (12) abgewandten ersten Federelement (38a).

4. Dachhaken nach dem Anspruch 3,
**dadurch gekennzeichnet,**
**dass** ein Profil der zwei Federelemente (38a, 38b) im Verzweigungsabschnitt (36) zur Spannungsoptimierung lambdaförmig und/oder mit einem bogenförmigen ersten Federelement (38a), ausgebildet ist, wobei das lambdaförmige Profil im Verzweigungsabschnitt (36) bevorzugt einen Verzweigungsradius (R1) von wenigstens 2mm bis 5mm und/oder das bogenförmige erste Federelement (38a) bevorzugt einen Radius (R2) von wenigstens 40mm bis 50mm aufweist.

5. Dachhaken nach einem der Ansprüche 1 bis 4,
**dadurch gekennzeichnet,**
**dass** der Verbindungsabschnitt (24) des Bügelträgers (12) zumindest im Bereich der zumindest einen ersten Befestigungsöffnung (26a) eine ebene und im montierten Zustand zu der Grundfläche (22) parallele Anschlagsoberfläche (30) für das Verbindungsmittel (28) ausbildet.

6. Dachhaken nach den Ansprüchen 3 und 5,
**dadurch gekennzeichnet,**
**dass** die Anschlagsoberfläche (30) in einer Oberseite des ersten Federelements (38a) ausgebildet ist, wobei das erste Federelement (38a) eine der Anschlagsoberfläche (30) gegenüberliegende ebene erste Auflagefläche (42a) aufweist, die im montierten Zustand in einer unteren ersten Aufnahmenut (20) auf der Innenseite (33) der Grundplatte (32) des Grundträgers (14) aufliegt.

7. Dachhaken nach einem der Ansprüche 3 bis 6,
**dadurch gekennzeichnet,**
**dass** der Bügelträger (12) vor dem Verzweigungsabschnitt (36) der zwei Federelemente (38a, 38b) eine ebene zweite Auflagefläche (42b) aufweist, die im montierten Zustand in einer unteren ersten Aufnahmenut (20) auf einer Innenseite (33) des Grundträgers (14) aufliegt.

8. Dachhaken nach einem der Ansprüche 2 bis 7,
**dadurch gekennzeichnet,**
**dass** der erste Führungsschenkel (34a) des Grundträgers (14), der im montierten Zustand einem Bügelabschnitt (25) abgewandt ist, eine kleinere Höhe (H1) aufweist als der zweite Führungsschenkel (34b), um besonders platzsparend in einem schrägen Einbauraum (56) zwischen der Dacheindeckung (19) und der Dachunterkonstruktion (18) montierbar zu sein.

9. Dachhaken nach einem der Ansprüche 1 bis 6,
**dadurch gekennzeichnet,**
**dass** mehrere zweite Befestigungsöffnungen (26b) in dem Grundträger (14) in einer ersten Reihenanordnung (40a) und/oder einer zweiten Reihenanordnung (40b) entlang der Längserstreckungsachse (L) und versetzt zu einer Mittelebene (M) zwischen den Aufnahmenuten (20, 21) angeordnet sind.

10. Dachhaken nach dem Anspruch 9,
**dadurch gekennzeichnet,**
**dass** die erste und/oder die zweite Reihenanordnung (40a, 40b) entlang der Längserstreckungsachse (L) ein Langloch (26c) und zwei seitliche Durchgangsbohrungen (26d) aufweist.

11. Dachhaken nach einem der Ansprüche 1 bis 9,
**dadurch gekennzeichnet,**
**dass** eine Länge (L1) des Grundträgers (14) zumindest dem zweifachen, besonders bevorzugt dem dreifachen, einer Breite (B1) des Bügelträgers (12) entspricht.

12. Dachhaken nach einem der Ansprüche 1 bis 10,
**dadurch gekennzeichnet,**
**dass** der Bügelträger (12) und/oder der Grundträger (14) aus Metall, insbesondere Aluminium, und in einem Strangpressverfahren herstellbar sind.

13. Dachkonstruktion mit wenigstens einem Dachhaken (10) nach einem der Ansprüche 1 bis 12 und mit Verbindungsmittel (28), wobei die Verbindungsmittel (28) als wenigstens eine Schraube, insbesondere eine selbstbohrende Holzschraube und/oder eine Betonschraube, ausgebildet sind, die im montierten Zustand zumindest durch die erste und die zweite Befestigungsöffnung (26a, 26b) geführt sind und den Bügelträger (12) zusammen mit dem Grundträger (14) an einer Dachunterkonstruktion (18) kraftschlüssig befestigen.

14. Verfahren zur Montage eines Dachhakens (10) auf einer Dachunterkonstruktion (18), insbesondere einem Dachhaken (10) nach einem der Ansprüche 1 bis 12 und insbesondere einer Dachkonstruktion (18) nach dem Anspruch 13, wobei der Dachhaken (10) einen Bügelträger (12) zum Umgreifen einer Dacheindeckung (19) und einen Grundträger (14) zur Auflage auf der Dachunterkonstruktion (18) umfasst, wobei der Grundträger (14) eine Aufnahmenut (20), bevorzugt mehrere Aufnahmenuten (20, 21) entlang einer Höhenrichtung (H) oberhalb einer Grundfläche (22) aufweist,
mit den folgenden Schritten:
- Ausrichten, und insbesondere Befestigen, des Grundträgers (14) auf einer freigelegten Dachunterkonstruktion (18),
- Formschlüssiges Einschieben und seitliches Ausrichten eines Verbindungsabschnitts (24) des Bügelträgers (12) in eine der bevorzugt mehreren Aufnahmenuten (20, 21) des Grundträgers (14) entlang einer Längserstreckungsrichtung (L), derart, dass eine erste Befestigungsöffnung (26a) in dem Bügelträger (12) mit einer zweiten Befestigungsöffnung (26b) in dem Grundträger (14) zumindest teilweise überlappen,
- Einbringen von Verbindungsmitteln (28) wenigstens durch die eine erste Befestigungsöffnung (26a) und die eine zumindest teilweise überlappende zweite Befestigungsöffnung (26b),
- Befestigen des Dachhakens (10), durch die Verbindungsmittel (28), insbesondere ein Einschrauben der Verbindungsmittel (28), mit der Dachunterkonstruktion (18).

15. Verfahren zur Montage eines Dachhakens (10) nach dem Anspruch 14, wobei der Bügelträger (12) an einer Dacheindeckung (19), insbesondere einer Dachpfanne, ausgerichtet wird, wobei der Bügelträger (12) derart seitlich entlang der Längserstreckungsrichtung (L) verstellt wird und bevorzugt eine der mehreren Aufnahmenuten (20, 21) entlang der Höhenrichtung (H) derart ausgewählt wird, dass der Bügelträger (12) an einer Unterseite einer Dacheindeckung (19) zumindest abschnittsweise flächig anliegt, um die Dichtheit der Dacheindeckung (19) weiter zu gewährleisten.

## Claims

1. A roof hook (10) for fastening elements to be mounted (16), in particular photovoltaic panels and/or solar heat panels, to a roof substructure (18), the roof hook (10) comprising a bracket support (12) for engaging around a roof covering (19) and a base support (14) for resting on the roof substructure (18), the base support (14) having one receiving groove (20), preferably several receiving grooves (20, 21), spaced vertically apart from a base surface (22) along a vertical direction (H), the bracket support (12) being insertable in the receiving grooves (20, 21) along a longitudinal direction (L) of the base support (14) in a form-fitted manner via at least one connective section (24),
**characterized in that**
the bracket support (12) has at least one first fastening opening (26a) in the connective section (24) and the base support (14) has at least one second fastening opening (26b), at least one first and one second fastening opening (26a, 26b) overlapping at least partially in such a manner when mounted that connectors (28) are guidable through to the roof substructure (18).

2. The roof hook according to claim 1,
**characterized in that**
the base support (14) is designed as a U-shaped profile body having a base plate (32) and a first and a second lateral guide leg (34a, 34b), the preferably several receiving grooves (20, 21) each being formed in the two guide legs (34a, 34b) along the longitudinal axis (L).

3. The roof hook according to claim 1 or 2,
**characterized in that**
the bracket support (12) has branching section (36) branching into a first spring element (38a) and a second spring element (38b) in a connective section (24), the first spring element (38a) and the second spring element (38b) being configured to engage in one of the preferably several receiving grooves (20, 21), the at least one first fastening opening (26a) being formed at least in the first spring element (38a), in particular in a first spring element (38a) facing away from the bracket section (25) of the bracket support (12).

4. The roof hook according to claim 3,
**characterized in that**
a profile of the two spring elements (38a, 38b) is lambda-shaped and/or has a bow-shaped first spring element (38a) in the branching section (36) for tension optimization, the lambda-shaped profile preferably having a branching radius (R1) of at least 2 mm to 5 mm in the branching section (36) and/or the bow-shaped first spring element (38a) preferably having a radius (R2) of at least 40 mm to 50 mm.

5. The roof hook according to any one of the claims 1 to 4,
**characterized in that**
the connective section (24) of the bracket support (12) forms a plane stop surface (30) for the connectors (28) at least in the area of the at least one first fastening opening (26a), the stop surface (30) being parallel to the base surface (22) when mounted.

6. The roof hook according to claim 3 and 5,
**characterized in that**
the stop surface (30) is formed in an upper side of the first spring element (38a), the first spring element (38a) having a plane first mounting surface (42a) which is opposite the stop surface (30) and rests on the inner side (33) of the base plate (32) of the base support (14) in a lower first receiving groove (20) when mounted.

7. The roof hook according to any one of the claims 3 to 6,
**characterized in that**
the bracket support (12) has a plane second mounting surface (42b) in front of the branching section (36) of the two spring elements (38a, 38b), the second mounting surface (42b) resting on an inner side (33) of the base plate (14) in one of the lower first receiving grooves (20) when mounted.

8. The roof hook according to any one of the claims 2 to 7,
**characterized in that**
the first guide leg (34a) of the base support (14) facing away from a bracket section (25) when mounted has a lower height (H1) than the second guide leg (34b) in order to be mountable in a particularly space-saving manner in a pitched installation space (56) between the roof covering (19) and the roof substructure (18).

9. The roof hook according to any one of the claims 1 to 6,
**characterized in that**
several second fastening openings (26b) are disposed in the base support (14) between the receiving grooves (20, 21) in a first row arrangement (40a) and/or a second row arrangement (40b) along the longitudinal axis (L) and at an offset to a center plane (M).

10. The roof hook according to claim 9,
**characterized in that**
the first and/or the second row arrangement (40a, 40b) has an oblong hole (26c) and two lateral through holes (26d) along the longitudinal axis (L).

11. The roof hook according to any one of the claims 1 to 9,
**characterized in that**
a length (L1) of the base plate (14) corresponds to at least double, particularly preferably triple, the breadth (B1) of the bracket support (12).

12. The roof hook according to any one of the claims 1 to 10,
**characterized in that**
the bracket support (12) and/or the base support (14) is producible of metal, in particular aluminum, and in an extrusion method.

13. A roof structure having at least one roof hook (10) according to any one of the claims 1 to 12 and having connectors (28), the connectors (28) being configured as at least a screw, in particular as a self-tapping wood screw and/or a concrete screw, which are guided at least through the first and the second fastening openings (26a, 26b) when mounted and fasten the bracket support (12) together with the base support (14) in a force-fit manner on a roof substructure (18).

14. A method for mounting a roof hook (10) on a roof substructure (18), in particular a roof hook (10) according to any one of the claims 1 to 12 and in particular a roof structure (18) according to claim 13, the roof hook (10) comprising a bracket support (12) for engaging around a roof covering (19) and a base support (14) for resting on the roof substructure (18), the base support (14) having one receiving groove (20), preferably several receiving grooves (20, 21) above a base surface (22) along a vertical direction (H),
the method comprising the following steps:
- orienting, and in particular fastening, the base support (14) on an exposed roof substructure (18),
- inserting in a form-fitted manner and laterally orienting a connective section (24) of the bracket support (12) in one of the preferably several receiving grooves (20, 21) of the base support (14) along a longitudinal direction (L) in such a manner that a first fastening opening (26a) in the bracket support (12) at least partially overlaps with a second fastening opening (26b) in the base support (14),
- introducing connectors (28) at least through the one first fastening opening (26a) and an at least partially overlapping second fastening opening (26b),
- fastening the roof hook (10), via the connectors (28), in particular screwing the connectors (28), to the roof substructure (18).

15. The method for mounting a roof hook (10) according to claim 14, the bracket support (12) being oriented on a roof covering (19), in particular a roof tile, the bracket support (12) being displaced laterally in such a manner along the longitudinal direction (L) and preferably one of the several receiving grooves (20, 21) being chosen in such a manner along the vertical direction (H) that at least sections of the bracket support (12) rest flush on an underside of a roof covering (19) in order to further ensure the impermeability of the roof covering (19).

## Revendications

1. Crochet de couvreur (10) pour des éléments d'appui à monter (16), notamment des panneaux photovoltaïques et/ou des panneaux solaires thermiques, sur une sous-construction de toit (18), le crochet de couvreur (10) comprenant un support d'étrier (12) pour s'engager autour d'une toiture (19) et un support de base (14) pour appuyer sur la sous-construction de toit (18), le support de base (14) ayant une rainure de réception (20), de préférence plusieurs rainures de réception (20, 21), espacées verticalement d'une surface de base (22) le long d'une direction verticale (H), le support d'étrier (12) pouvant être inséré dans les rainures de réception (20, 21) le long d'une direction longitudinale (L) du support de base (14) de manière ajustée par l'intermédiaire d'au moins une partie de connexion (24),
**caractérisé en ce que**
le support d'étrier (12) a au moins une première ouverture d'appui (26a) dans la partie de connexion (24) et le support de base (14) a au moins une deuxième ouverture d'appui (26b), au moins une première et une deuxième ouverture d'appui (26a, 26b) se chevauchant au moins partiellement de telle sorte que, lorsqu'elles sont montées, les raccords (28) peuvent être guidées jusqu'à la sous-construction de toit (18).

2. Crochet de couvreur selon la revendication 1,
**caractérisé en ce que**
le support de base (14) est conçu comme corps de profil en forme de U ayant une plaque de base (32) et un premier et un deuxième jambe de guidage (34a, 34b) latéral, les rainures de réception (20, 21) étant de préférence formées chacune dans les deux jambes de guidage (34a, 34b) le long de l'axe longitudinal (L).

3. Crochet de couvreur selon la revendication 1 ou la revendication 2,
**caractérisé en ce que**
le support d'étrier (12) a une partie de branchement (36) se ramifiant en un premier élément de ressort (38a) et un deuxième élément de ressort (38b) dans une partie de connexion (24), le premier élément de ressort (38a) et le deuxième élément de ressort (38b) étant configurés pour s'engager dans l'une des rainures de réception (20, 21), l'au moins une première ouverture d'appui (26a) étant formée au moins dans le premier élément de ressort (38a), notamment dans un premier élément de ressort (38a) orienté à l'opposé de la partie d'étrier (25) du support d'étrier (12).

4. Crochet de couvreur selon la revendication 3,
**caractérisé en ce**
**qu'**un profil des deux éléments de ressort (38a, 38b) est en forme de lambda et/ou a un premier élément de ressort (38a) en forme d'arc dans la partie de branchement (36) pour l'optimisation de la tension, le profil en forme de lambda ayant de préférence un rayon de branchement (R1) d'au moins 2 mm à 5 mm dans la partie de branchement (36) et/ou le premier élément de ressort (38a) en forme d'arc ayant de préférence un rayon (R2) d'au moins 40 mm à 50 mm.

5. Crochet de couvreur selon l'une quelconque des revendications 1 à 4,
**caractérisé en ce que**
la partie de connexion (24) du support d'étrier (12) forme une surface d'appui (30) plane pour les raccords (28) au moins dans la zone d'au moins une première ouverture d'appui (26a), la surface d'appui (30) étant parallèle à la surface de base (22) lorsqu'elle est montée.

6. Crochet de couvreur selon la revendication 3 et la revendication 5,
**caractérisé en ce que**
la surface d'appui (30) est formée dans un côté supérieur du premier élément de ressort (38a), le premier élément de ressort (38a) ayant une première surface de montage (42a) plane qui est opposée à la surface d'appui (30) et s'appuie sur l'intérieur (33) de la plaque de base (32) du support de base (14) dans une première rainure de réception (20) inférieure lorsqu'il est monté.

7. Crochet de couvreur selon l'une quelconque des revendications 3 à 6,
**caractérisé en ce que**
le support d'étrier (12) a une deuxième surface de montage (42b) plane devant la partie de branchement (36) des deux éléments de ressort (38a, 38b), la deuxième surface de montage (42b) appuyant sur un intérieur (33) de la plaque de base (14) dans l'une des premières rainures de réception (20) inférieures lorsqu'elle est montée.

8. Crochet de couvreur selon l'une quelconque des revendications 2 à 7,
**caractérisé en ce que**
la première jambe de guidage (34a) du support de base (14) orientée à l'opposé d'une partie d'étrier (25) lorsqu'elle est montée a une hauteur (H1) inférieure à celle de la deuxième jambe de guidage (34b) afin de pouvoir être montée de manière particulièrement peu encombrante dans un espace d'installation dénivelé (56) entre la toiture (19) et la sous-construction de toiture (18).

9. Crochet de couvreur selon l'une quelconque des revendications 1 à 6,
**caractérisé en ce que**
plusieurs deuxièmes ouvertures d'appui (26b) sont disposées dans le support de base (14) entre les rainures de réception (20, 21) dans un premier agencement en ligne (40a) et/ou dans un deuxième agencement en ligne (40b) le long de l'axe longitudinal (L) et à un décalage par rapport à un plan central (M).

10. Crochet de couvreur selon la revendication 9,
**caractérisé en ce que**
le premier et/ou le deuxième agencement en ligne (40a, 40b) a un trou oblong (26c) et deux trous de passage (26d) latéraux le long de l'axe longitudinal (L).

11. Crochet de couvreur selon l'une quelconque des revendications 1 à 9,
**caractérisé en ce**
**qu'**une longueur (L1) de la plaque de base (14) correspond au moins au double, de préférence au triple, de la largeur (B1) du support d'étrier (12).

12. Crochet de couvreur selon l'une quelconque des revendications 1 à 10,
**caractérisé en ce que**
le support d'étrier (12) et/ou le support de base (14) peut être produit en métal, notamment en aluminium, et selon un procédé d'extrusion.

13. Structure de toit ayant au moins un crochet de couvreur (10) selon l'une quelconque des revendications 1 à 12 et ayant des raccords (28), les raccords (28) étant configurés comme au moins une vis, notamment comme vis à bois autotaradeuse et/ou vis à béton autotaradeuse, qui sont guidées au moins à travers la première et la deuxième ouverture d'appui (26a, 26b) lorsqu'ils sont montés et fixent le support d'étrier (12) avec le support de base (14) d'une manière forcée sur une sous-construction de toit (18).

14. Procédé pour le montage d'un crochet de couvreur (10) sur une sous-construction de toit (18), notamment un crochet de couvreur (10) selon l'une quelconque des revendications 1 à 12 et notamment une structure de toit (18) selon la revendication 13, le crochet de couvreur (10) comprenant un support d'étrier (12) pour s'engager autour d'une toiture (19) et un support de base (14) pour appuyer sur la sous-construction de toit (18), le support de base (14) ayant une rainure de réception (20), de préférence plusieurs rainures de réception (20, 21), au-dessus d'une surface de base (22) le long d'une direction verticale (H),
le procédé comprenant les étapes suivantes :
- orienter, et notamment fixer, le support de base (14) sur un toit de sous-construction (18) exposé,
- insérer de manière ajustée et orienter latéralement une partie de connexion (24) du support d'étrier (12) dans l'une des de préférence plusieurs rainures de réception (20, 21) du support de base (14) le long d'une direction longitudinale (L) de manière à ce qu'une première ouverture d'appui (26a) du support d'étrier (12) chevauche au moins partiellement une deuxième ouverture d'appui (26b) du support de base (14),
- introduire des raccords (28) au moins à travers la première ouverture d'appui (26a) et la deuxième ouverture d'appui (26b) qui se chevauchent au moins partiellement,
- fixer le crochet de couvreur (10), par l'intermédiaire des raccords (28), notamment en vissant les raccords (28), à la sous-construction de toit (18).

15. Procédé de montage d'un crochet de couvreur (10) selon la revendication 14, le support d'étrier (12) étant orienté sur une toiture (19), notamment une tuile, le support d'étrier (12) étant déplacé latéralement de telle manière le long de la direction longitudinale (L) et de préférence l'une des plusieurs rainures de réception (20, 21) étant choisie de telle manière selon la direction verticale (H) qu'au moins des sections du support d'étrier (12) appuient sur une face inférieure d'une toiture (19) afin de garantir davantage l'imperméabilité de la toiture (19).
